(19) Europäisches Patentamt / European Patent Office / Office européen des brevets

(11) **EP 2 659 786 A2**

(12) **EUROPEAN PATENT APPLICATION**
published in accordance with Art. 153(4) EPC

(43) Date of publication:
**06.11.2013 Bulletin 2013/45**

(21) Application number: **11854322.2**

(22) Date of filing: **29.12.2011**

(51) Int Cl.:
***A23K 1/18*** *(2006.01)*    ***A61K 35/74*** *(2006.01)*

(86) International application number:
**PCT/CL2011/000083**

(87) International publication number:
**WO 2012/088621 (05.07.2012 Gazette 2012/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.12.2010 CL 16282010**

(71) Applicant: **Universidad De Concepcion Concepción 4070386 (CL)**

(72) Inventors:
  • **CASTRO INOSTROZA, Erica Conceptión (CL)**

  • **BORQUEZ YAÑEZ,Rodrigo Conceptión (CL)**
  • **FERRER VALENZUELA, Jaime Conceptión (CL)**
  • **TOLEDO AGUILAR, Natalia Conceptión (CL)**

(74) Representative: **Carvajal y Urquijo, Isabel et al Clarke, Modet & Co. c/ Goya, 11 28001 Madrid (ES)**

(54) **PROBIOTIC FOOD SUITABLE FOR SALMONID FISH SPECIES AND THE PREPARATION THEREOF**

(57)    The present patent describes a probiotic feed for salmonids containing at least one lactic acid strain, obtained from the said salmonids, with immunostimulant and protective properties, in addition to the production process of the said feed, consisting of the following steps: (a) putting into a fermenter a source of carbon and an inoculum of at least one probiotic strain, (b) the addition of nutritional components, (c) the cold extrusion of the mixture, (d) the formation of pellets, and (e) the drying of the pellets.

EP 2 659 786 A2

**Description**

**TECHNICAL SECTOR**

The present technology is aimed at the industrial sector, principally the aquaculture industry, and refers to a process for the production of feed that includes probiotic strains with immunostimulant and protective properties that facilitate the prevention of diseases, thus avoiding the use of the invasive techniques used to date.

**PRIOR ART**

Salmon farming plays a very important role today in the economy of Chile, since it has had an annual export growth rate of 20% in the last 16 years. In 2008 salmon exports were worth US$2475 million, which represented an increase of 6.4% in comparison with the previous year. The most important farmed species are: Atlantic salmon (*Salmo salar*)*,* which in 2007 represented 50.5% of Chilean salmon exports; Pacific salmon (*Oncorhynchus kisutch),* which represented 20.7%; and rainbow trout *(Oncorhynchus mykiss),* which accounted for 27.4% of exports.

At a global level, there is a marked tendency towards clean production to prevent the adverse effects that the production process can have, both on the environment as well as on the health of the population. The aquaculture industry is conscious of this situation and is currently involved internationally in openly promoting the introduction of new methods of biological control in fish, mollusc and crustacean farming. As a significant participant in this market, Chile needs to take such developments into account. At the present time, the signing of trade agreements has opened up commercial opportunities for this production sector, but as the same time it has created new challenges for our aquaculture production because of the growing development and implementation of sanitary barriers that make more demands on Chile.

The appearance of different pathologies in fish is directly proportional to their physiological state, the virulence factors of the infecting microorganism, the infecting dose and principally the level of environmental pollution and general environmental equality. For the aforementioned reasons, sanitary conditions are vitally important for fish  farms, as the confinement systems, the intensive production of fish in tanks and the presence of accompanying wildlife all considerably increase the transmission of contagious infectious diseases and the appearance of new pathogens.

The Chilean salmon industry is now passing through a severe sanitary crisis with significant labour and social consequences. This crisis has been mainly caused by the indiscriminate use of great quantities of pharmaceutical drugs, in far larger amounts than those administered in Norway, Chile's principal market competitor. The most commonly used methods for the administration of pharmaceutical drugs have been immersion baths and, more recently, the inclusion of drugs in the fish diet. However, worldwide research shows that between 75% and 93% of antibiotics administered in salmon farming are not consumed or are simply defecated out.

The indiscriminate administration of antibiotics in an indirect way (immersion baths) is associated with a negative environmental impact, especially in coastal areas where adverse climatic conditions place an additional stress on fish. The non-assimilated antibiotics become available for native fauna present in the water column and in sediments. By absorbing surplus feed, this native fauna can accumulate small quantities of antibiotics in their organism, thus favouring the development of resistant pathogens. Research conducted on salmon farms using antibiotics shows that the bacteria found under farming modules present an increased resistance to antibiotics for up to one year after treatment. It is for this reason that the effects of antibiotics on bacterial communities and the specific composition levels are clearly identifiable a number of weeks or months after treatment.

Currently, the administration of antibiotics on salmon farms is a frequent and widespread practice in aquaculture. This practice leads to the presence of these substances in humans and animals, thereby creating bacterial resistance in such individuals. Pathogen control methods using antibiotics are therefore now being replaced by biological control methods, which represent an interesting possibility from an economic, environmental and scientific point of view.

This scenario has stimulated the search for new methods of biological disease control for salmonids to reduce the impact of chemical products and artificial feed on the environment. Probiotics have appeared as an innovatory alternative that is environmentally friendly. Probiotics are defined as "living microorganisms that benefit  the health of the host, when administered in appropriate quantities". The development of suitable probiotics is not a simple task, requiring fundamental empirical research, large-scale testing, the development of appropriate monitoring instruments and production under strict quality controls. Probiotics commonly used in aquaculture include a wide range of taxas, from lactic bacteria to other microorganisms, such as yeast.

For this reason, the present technology uses the benefits of probiotics to increase productivity and competitivity in the national and international market for salmonids.

Five documents were found in relation to the present technology, as described in the following section:

The invention patent from the Japan Patent Office JP2004298080 (2004), *Feed for fish and shellfish, and method*

*for producing the same,* protects a method for the production of feed for fish and molluscs that includes the fermentation of algae using at least one type of lactobacillus selected from the group consisting of *L. plantarum, L. casei, L. rhamnosus, L. kefir, L. fermentum,* subsequent to the treatment of the algae with an enzyme that digests saccharides, or during said treatment. For this method, the fermentation of the algae makes it possible to obtain fine particles by using a specific lactobacillus, thus creating a feed safe for zooplankton, small fish, bivalves or other aquatic animals, with a high level of efficiency in production and good preservation. This method does not resemble the process for which protection is being sought in this application.

The invention patent from the World Patent Office WO200404186 (2004**),** *Probiotic additive and the production method thereof,* describes a feed compound that contains probiotics for farm animals, poultry and farmed fish. The probiotic additive is produced through a bacterial biomass mixture of *Bacillus subtilis* B-2250 and/or *Bacillus licheniformis* B-2252 with auxiliary substances such as absorbent carriers and high-absorbency fillers. The said invention makes it possible to produce microencapsulated probiotic additives that contain probiotics, and that are easy to use and consume, with stabilised preserving properties at all stages of production. The said microencapsulated dry probiotic additive improves feed and the state of the animal, increasing weight gain and reducing the death rate. Although this technology mentions probiotic feed, both the method and the form in which this probiotic additive is presented differ from the technology that this application wishes to protect.

The invention patent application at the United States Patent and Trademark Office US2002192202 **(**2002**),** *Probiotic compounds derived from Lactobacillus casei strain KE01,* protects a probiotic composition that includes *Lactobacillus casei* KE01 used in the inhibition of diseases produced by enteric pathogens in animals, maintaining the health of the animal. This technology describes a method to produce this probiotic composition and a method to use it by means of gelatine capsules, animal feed tablets and liquids. The aforementioned proposal differs completely from the initiative that this application wishes to protect.

The invention patent application from the Intellectual Property Office of New Zealand NZ335458 (2001**),** *Feed production salmonides (Atlantic salmon or rainbow trout) which increases growth rates, digestibility of protein and fat and feed utilisation of fish,* describes a method for the production of fish feed that includes fish products, standard feeding components and fish feed. It also includes ammonium formate, sodium or potassium, in addition to formic acid or mixtures thereof. Finally, the fish feed contains preferably 0.3% to 2.5% formates in weight as a percentage of the total feed weight. This invention is totally different from the technology that this application wishes to protect. Although both refer to fish feed, preferably for salmonids, both the composition of the feed and the method of production are completely different.

Lastly, the invention patent application at the United States Patent and Trademark Office US6168815 (2001), *Method for continuous production of dry feed for fish and shell fish,* refers to a method for continuous production of dry feed for fish and crustaceans that includes raw fresh fish and plant carbohydrates, together with other additives that provide a carbohydrate content of at least 5% during feed production. In every step of the process, the water content of the pellets exceeds 10%. The feed produced contains 25% to 60% proteins, 10% to 40% fat and 5% to 25% carbohydrates. The feed also contains 25% to 60% fish protein as well as more than 40% fat in the form of fish oil. This product is totally different from the one this application wishes to protect, since it does not use any probiotic in its formula, and the procedure for the preparation of this feed is also different from the one for which protection is being sought.

In addition to the patents, a number of documents were found that have some relationship with the present invention; these documents are analysed in the following section:

Probiotic effect of lactic acid bacteria in the feed on growth and survival of fry of Atlantic cod (Gadus morhua) Hydrobiologia 352: 279-285,1997.

This document refers to the search for alternative methods for disease control in aquatic organisms. The study mentions the use of probiotics in the feed of Atlantic cod fry *(Gadus morhua)* which were then exposed to a virulent strain of *Vibrio anguillarum.* The death rate was observed after three weeks of feeding) including a lactic acid bacteria supplement. The results obtained showed an increased resistance to the disease and colonisation by the lactic acid bacteria of the intestinal flora in surviving fish. An inhibition in the pathogen strain growth rate was also observed. The fundamental difference between this technology and that for which we are seeking protection lies in the preparation of the feed. The aforementioned study used a commercial feed to which was added a specified amount of lyophilised biomass of the probiotic strain, which was then given to the fish fry. In contrast, in our initiative the probiotic is incorporated into the feed in a very different way from the one described above.

Immune enhancement in rainbow trout (Oncorhynchus mykiss) by potential probiotic bacteria (Lactobacillus rhamnosus) Fish & Shellfish Immunology 15 (2003) 443-452.

This study is related to increased fish immunity acquired through the use of the lactic acid bacterium *Lactobacillus rhamnosus.* The bacterium was administered orally in different doses to rainbow trout that were fed for two weeks. Periodic samples of blood and skin mucus were taken, as well as samples of tank water. Results showed that the immune parameters of the rainbow trout improved considerably through the use of the probiotic strain. As with the previous study, the difference between this initiative and the one for which we are seeking protection is that fish are given a commercial feed to which dry biomass of *Lactobacillus rhamnosus* is added, which makes it completely different from the technology for which protection is sought.

**DESCRIPTION OF THE INVENTION**

The invention describes a probiotic feed for salmonids that includes lactic acid strains obtained from said salmonids, among which are *Lactobacillus plantarum* LPS47, *Lactococcus lactis lactis* LPS148, LPS28 *Pediococcus acidilactic,* obtained from salmon and the strains *Pediococcus damnosus* LPT32 and *Lactobacillus plantarum* LPT87 obtained from trout *(Onchorhynchus mykiss),* with excellent colonisation properties and protective properties against some microbial agents, in addition to production processes of said probiotic feed.

In aquaculture, one of the most commonly used techniques for disease prevention is vaccination. This method has clear disadvantages, however, in that it is invasive, is not preventive in the early stages of fish development, and is restricted to certain pathogens only. The major advantage of isolated strains is that they protect the fish from diseases that are widespread on fish farms.

At the same time, the use of probiotics has become an alternative means to that of antibiotics in reducing disease, and the incorporation of probiotic biomass into feed, another alternative for protecting fish from pathogens, has been the subject of constant research. One method used is the addition of dehydrated biomass (in the form of a powder) produced by spray drying, which is mixed with commercial feed at the time of feeding. However, it has been determined that the most serious disadvantage of this method is the lack of homogeneity in the probiotic powder-commercial feed mix.

The technology proposed here solves the existing problem with clear advantages in the following ways: 1) The probiotic is added in other stages of the feed production process, for example during the formation of pellets or in the drying stage, either on a fluidised bed or in a vacuum, and 2) through an alternative process, such as the incorporation of the biomass during the formulation stage, mixed with the feed, from biological (fish) silage containing lactic strains, or 3) a combination of both (pulverised feed mixed with the incorporated culture to be dehydrated in a spray dryer). All these processes imply one final objective: to obtain a probiotic product with a high bacterial concentration and with a low moisture content (less than 10%) the active principle of which, the probiotic strain, retains its viability and its properties during storage at ambient temperature.

In order to implement this technology, the first step is to isolate the strains, obtained in aseptic conditions from stomach and intestinal swab samples and from gill and skin smears, both from salmon (*Salmo salar* and *Oncorhynchus kisutch)* and from rainbow trout *(Onchorhynchus mykiss).* After a number of analyses, the most competent strains are selected, *Lactobacillus plantarum* LPS47, *Lactococcus lactis lactis* LPS148, LPS28 *Pediococcus acidilactic,* obtained from salmon, and *Pediococcus damnosus* LPT32 and Lactobacillus *plantarum* LPT87 obtained from trout.

These strains are identified molecularly, their probiotic properties having been previously characterised, to be defined as LPS (Salmon Probiotic Lactobacillus) or LPT (Trout Probiotic Lactobacillus).

An important stage associated with the probiotic action mechanism is the adhesion and subsequent colonisation of the epithelium, which is the attraction of the tested bacterium to the surface of the tissue of interest, followed by the association of the mucus with the epithelial cells. The adhesion and colonisation of the mucus on the surface of the tissue are possible protection mechanisms against pathogens because of competition for sites and the stimulation of the immune system.

For this reason, adhesion tests are carried out on the lactic acid strains, measuring the adhesion of said isolated strains on salmon gastrointestinal tract, gills and skin in mucus extracted from salmon tissue using various methods, and the antibacterial potential of these strains is evaluated in a biological medium. In the case of strains obtained from trout, the capacity to colonise the gastrointestinal (GI) tract is evaluated, the isolation procedure being carried out by means of a sonic bath (SB), which is important as these strains adhere closely to the tissue surface of the GI tract. The antibacterial potential of these strains is also evaluated in a biological medium by studying the interaction of the two microorganisms in gastrointestinal epithelial tissue, emulating conditions existing in the tract of live fish. Subsequently, the highest adherence indices are determined, a property that can be quantified using both direct and indirect methods.

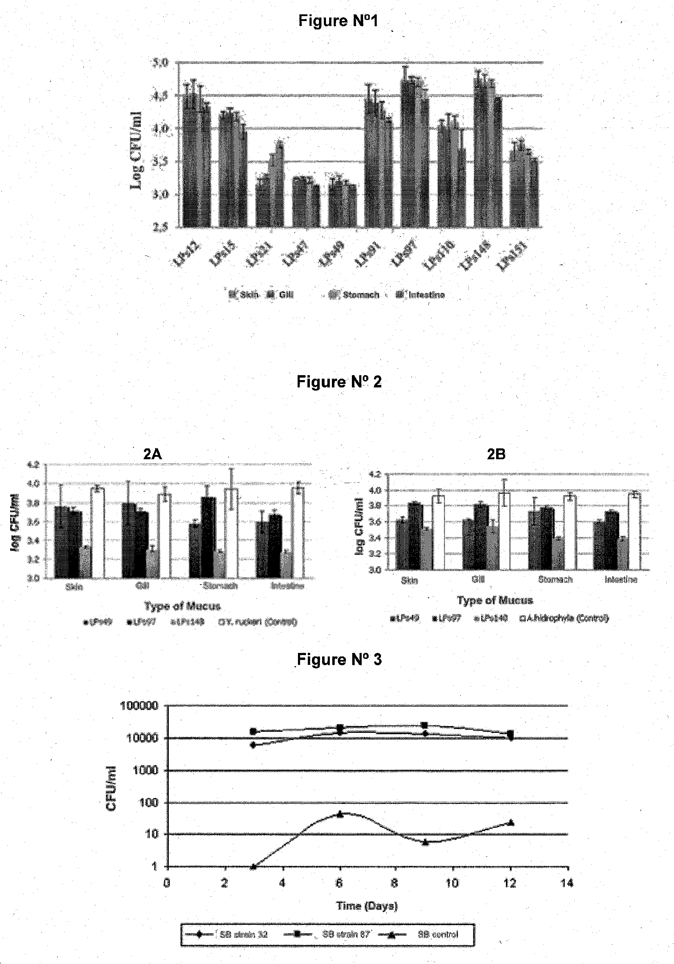

The tests carried out on salmon show significant differences in the adherence of the probiotic strains to the mucus used. Strain LPS148 is highly adherent to all the types of mucus used; and skin, gill and stomach mucus are significantly more compatible with the bacterium than intestinal mucus (Figure 1). This strain, in addition to its excellent adherence properties, was the one that inhibited the adherence of *Aeromonas hidrophyla* (Figure 2) and *Yersinia ruckeri* (Figure 2B) in all types of mucus, with  statistically significant results in all cases. In addition, its excluding capacity was in almost all experimental combinations higher than that of other lactic bacteria used.

In terms of the results obtained with trout, both strain LPT32 and LPT87 are capable of remaining in the GI tract for up to 12 days after inoculation. The sonicated bacteria show acceptable density levels and it is expected that they would have a higher degree of permanence. These are promising results, as one of the important requirements in the selection of a probiotic microorganism is the capacity to remain for prolonged periods of time in the GI tract of the animals treated (Figure 3).

With trout, it is observed that most strains show resistance to gentamicin (7 strains with halos ≤ 12 mm), neomycin (7 strains with halos ≤ 11 mm) and clindamycin (6 strains with halos ≤ 10 mm). All lactobacillus strains are resistant to metronidazole and vancomycin, in addition to cloxacillin, norfloxacin and ciprofloxacin. The values of the inhibition halos for doxycycline varied between 13 mm and 17 mm, with strains being either of medium resistance (13 mm to 14 mm) or susceptible (≥ 16 mm).

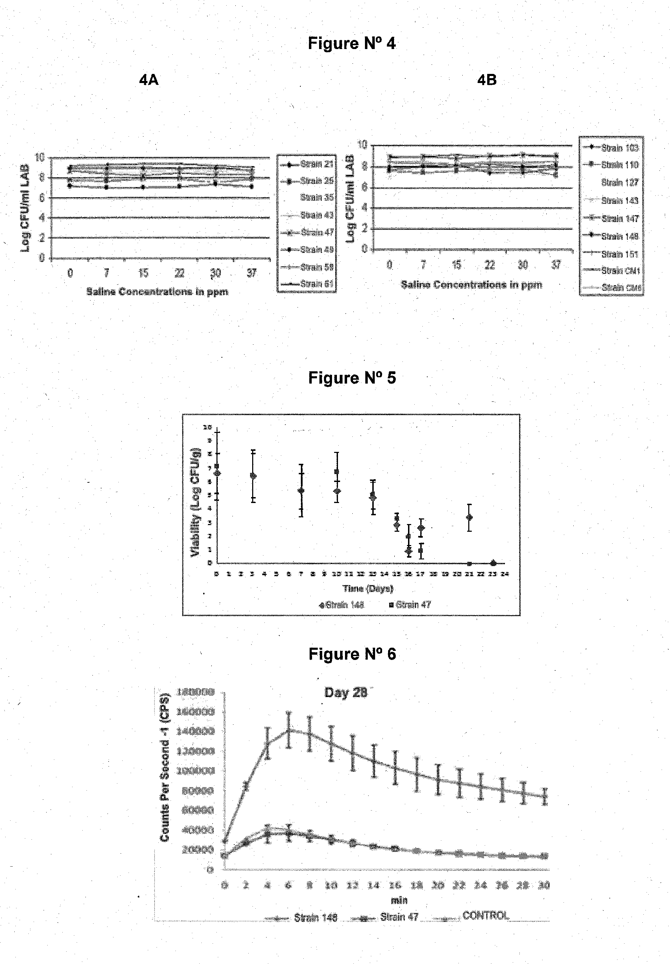

In terms of the resistance tests carried out on salmon with added salinity stress, it is observed that the exposure to different levels of salinity, even reaching sea levels, does not affect the antagonistic capacity of the lactic strains (strain 47 in Figure 4A, and strain 148 in Figure 4B). As the probiotic strains studied show satisfactory resistance to the salinity stress levels applied, they are therefore capable of resisting high salinity levels, even those approaching the levels of seawater. This further demonstrates the potential use, application and permanence of these organisms in products for different growth stages of salmon, particularly during the fattening phase.

In addition, the strains are tested to evaluate their resistance to acids present in the gastrointestinal tract of *Onchorhyncus mykiss*, for which a set of tubes with MRS medium and increasing concentrations of the acids studied were prepared. The pH range of the acids was pH 2.4 to pH 5.3 for the acetic acid and pH 1.2 to pH 6.0 for the hydrochloric acid.

**Table** 1

| | ACETIC ACID | |
|---|---|---|
| **BACTERIUM** | **Minimum pH with inhibiting effect** | **Minimum pH with bactericidal effect** |
| **Lactobacillus brevis (19)** | 4.48 | 3.94 |
| *Lactobacillus brevis* (21) | 4.45 | 3.60 |
| *Lactobacillus rhamnosus (22)* | 4.48 | 3.59 |
| *Lactobacillus rhamnosus (26)* | 4.44 | 3.58 |
| *Lactobacillus brevis (28)* | 4.47 | 4.17 |
| *Lactobacillus brevis (32)* | 4.78 | 3.87 |
| *Lactobacillus divergens (34)* | 4.46 | 3.92 |
| *Lactobacillus casei (67)* | 4.74 | 3.87 |
| *Lactobacillus plantarum (87)* | 4.48 | 3.60 |

**Table 2**

| | HYDROCHLORIC ACID | |
|---|---|---|
| **BACTERIUM** | **Minimum pH with inhibiting effect** | **Minimum pH with bactericidal effect** |
| **Lactobacillus brevis (19)** | 2.36 | 1.25 |
| *Lactobacillus brevis* (21) | 2.23 | 2.23 |
| *Lactobacillus rhamnosus (22)* | 2.32 | 2.32 |
| *Lactobacillus rhamnosus (26)* | 2.42 | 2.42 |
| *Lactobacillus brevis (28)* | 2.06 | 1.20 |
| *Lactobacillus brevis (32)* | 3.90 | 1.25 |
| *Lactobacillus divergens (34)* | 2.37 | 1.24 |
| *Lactobacillus casei (67)* | 2.23 | > 1.20 |
| *Lactobacillus plantarum (87)* | 3.19 | 3.19 |

According to the results shown in Tables 1 and 2, the range of pH values for the inhibition of lactobacillus strains from the gastrointestinal tract of rainbow trout in an MRS medium with acetic acid is much higher than the inhibiting pH values for the same strains, albeit with hydrochloric acid.

All strains tested showed resistance to a pH much lower than the pH of the gastrointestinal tract of trout. According to these results, all strains tested are therefore resistant to hydrochloric acid, thus making it possible to administer them orally.

One of the most important stages in the final selection of a probiotic is its capacity to colonise the epithelium of relevant organisms. The strains selected, LPS47 *Lactobacillus plantarum* and LPS148 *Lactobacoccus lactis lactis,* are administered as part of a preparation and are capable of remaining viable, adhering to and colonising the gastrointestinal tract of salmon during and after the administration of said preparation. Both probiotic strains are capable of remaining viable in the fish for a prolonged period of time. Strain LPS148 is isolated up to 11 days after the addition of probiotic to the tanks has been halted, whereas strain LPS47 can still be isolated when the final sample is taken on day 23 (day 13 after removing the probiotic strains from the diet). This shows that the strain is capable of remaining in the fish for a period longer than 13 days. These colonisation tests are very promising, as the strains are capable of remaining in the gastrointestinal tract of the salmonids various days after the probiotic is no longer administered through feed (Figure 5).

In addition, the immunostimulant effect of the oral application of the probiotic strains LPS148 and LPS47 is evaluated in rainbow trout juveniles (20g to 40 g). The fish are fed for 28 days with commercial pellets supplemented with probiotic strains at a concentration of $10^9$ CFU/g of feed. Every 7 days, 6 fish from each group are sacrificed, including those from the control group without supplement.

The principal (cell and humoral) hematological and immunological parameters evaluated are: haematocrit, total blood cell count, concentration of total plasmatic proteins, concentration of total antibodies, plasmatic lysozyme activity and immunological activation of the renal macrophages using chemiluminescence (respiratory burst).

The main immunological parameter with a significant increase is respiratory burst, observed only with the application of probiotic LPS148 (Figure 6). The remaining parameters do not show statistically significant differences and vary within normal ranges for the species and growth stage.

The immunological results show that the probiotic bacteria generate a nonspecific stimulation that is similar to that of a commercial immunostimulant and slightly superior to the stimulation generated in the control group. It can thus be affirmed that the effect produced by the preparation is beneficial and does not generate negative reactions in the fish. It is also observed that the oral application of the probiotics produces a more efficient and permanent effect compared with an intraperitoneal, application.

The protective role of these probiotic strains is also evaluated using challenge tests in which the lactic strains are challenged with a virulent strain of *Aeromonas sp.* The results of this study confirm that the administration of probiotics through feed has an important protective effect regarding *Aeromonas salmonicida,* the agent that causes furunculosis, an acute disease with an incubation period of between 5 and 12 days in freshwater. Two groups of coho salmon are used for the study, with one group receiving probiotic feed (strain LPS47) and a control group receiving only commercial feed. Subsequently, both groups are challenged with a virulent strain of *Aeromonas salmonicida,* administered intraperitoneally. After the challenge, the probiotic group continues with the diet supplemented with the LPS47 strain for 10 additional days. Water temperature and quality are measured daily, and all dead fish are subjected to a full necropsy to determine cause of death. In both groups, the beginning of pathological signs associated with furunculosis is detected and it is confirmed that the lesions found are caused by *Aeromonas salmonicida.*

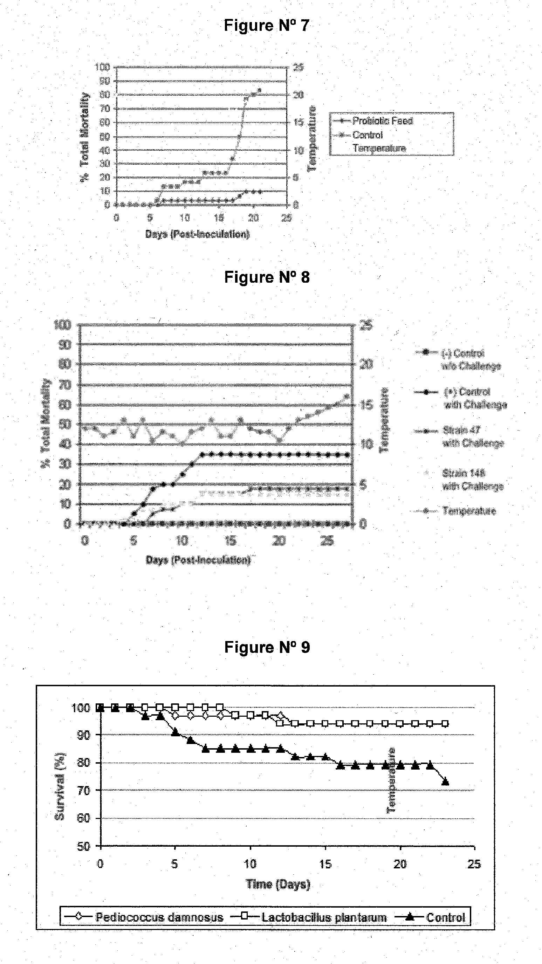

Mortality in the control group begins on day 6 after the challenge and reaches 83% on day 21. In the group fed with probiotics, however, mortality begins on day 7 post-challenge and only reaches a total mortality of 10% by the end of the test (day 21). The protective effect is therefore confirmed when challenging the probiotic strains with a virulent strain of *Aeromona sp.* and thereby achieving a dramatic reduction in the mortality of fish with regard to the control group (10% versus 83%, respectively). This confirmation of the effectiveness of the probiotic strain is shown in Figure 7.

The protective effect of two strains of probiotic bacteria is also observed when they are administered orally to rainbow trout alevins challenged with a virulent strain of F. *psychrophilum.* It is possible to successfully reproduce the disease through infection (cohabitation in lab conditions) and subsequently re-isolate a virulent strain of the bacterium from the spleen of dying fish. The challenge is carried out, also via intraperitoneal inoculation, in various groups of fish with and without probiotic supplement. Probiotic LPS148 shows a higher degree of protection against internal flavobacteriosis, with a total mortality of only 15%, compared to 35% in the control group. Probiotic LPS47 shows slightly higher mortality levels than LPS 148, but still less than half the deaths observed in the control group without probiotic (Figure 8).

Regarding the protective effect in trout, the probiotic effect of two endogenous acid lactic strains is analysed using *in vitro* antagonism tests such as bioassays with *Oncorhynchus mykiss* rainbow trout. Probiotic strains *Pediococcus damnosus* (LPT32) and *Lactobacillus plantarum* (LPT87) are administered orally in a concentration of $1*10^9$ CFU/g of feed. After two weeks with the probiotic treatment, fish are infected experimentally with the pathogen *Yersinia ruckeri,* and nonspecific immune response and survival are monitored. The strains studied inhibit *Yersinia ruckeri in vitro* and are capable of significantly reducing the mortality of rainbow trout infected experimentally with this pathogen. The aforementioned strains are therefore potentially usable on rainbow trout fish farms (Figure 9).

Once all the characteristics of the probiotic strains isolated from salmonid species have been established, a process is designed to produce a feed containing probiotic strains where the said strains maintain viability and concentration over time.

Different tests are carried out to ensure the viability of the probiotic strain in the feed. An important requirement for preparing feed with fresh biomass is minimising the addition of water. The process is therefore designed so that the final moisture content of the probiotic product does not exceed 9% on a wet basis (considering time of culture, biomass harvesting and disinfection of the mixing equipment). For this purpose, the bacterial culture is centrifuged and the biomass is re-suspended in sterile saline solution, with a culture:solution ratio of 4:1. With regard to bacterial concentration, the culture:feed ratio is 1:20 (i.e., every 1 litre of bacterial culture can be used to prepare 20 kg of feed), with an average concentration of $10^8$ CFU/g.

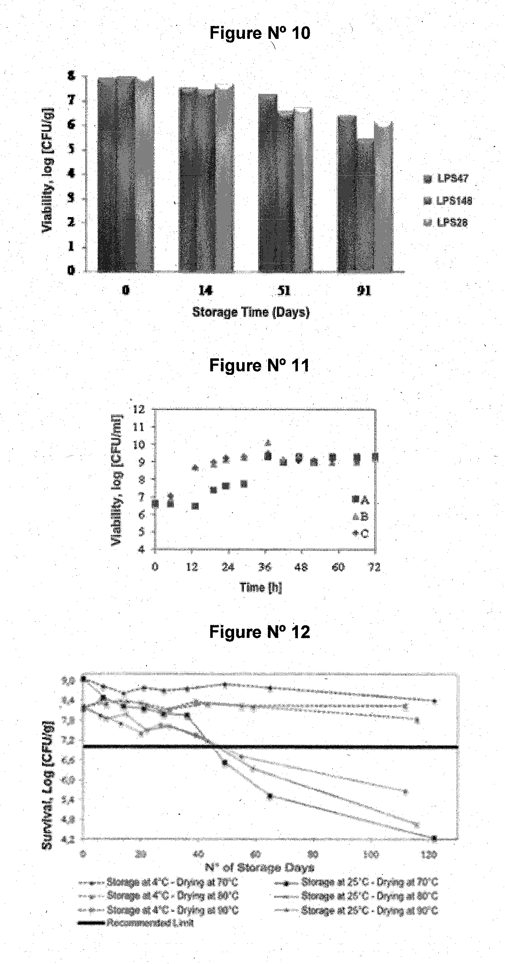

As the pellet is a highly porous solid, it rapidly absorbs the liquid with biomass that is added. This leads to a homogeneous distribution of the probiotic biomass with regard to the feed prepared. The average concentration of all batches produced in this way is $10^8$ CFU/g. The batches are stored in plastic bags in a cool and dry place (environmental temperature: 20°C; pressure: 1 atm, or 760 mmHg; and relative humidity of ambient air). Considering that the feed is prepared for consumption on a weekly basis, the results obtained are optimal, as the product retains a concentration higher than $10^7$ CFU/g after 14 days (Figure 10).

The use of biological (fish) silage is an environmentally sustainable and low-cost source of proteins with a high nutritional value. In addition, it is easy to produce, using waste from the fishing industry, such as heads, offal and other parts not intended for human consumption.

Thus, on the basis of a controlled fermentation process with lactic bacteria and carbohydrates, an acidified product (pH < 4.5) of excellent nutritional and antimicrobial quality is obtained that inhibits the proliferation of bacteria causing decomposition, and that can be stored for long periods of time.

It is observed that certain parameters can influence the quality of the feed to be produced, among which are the following: fermentation in solid substrates, culture temperature, the carbon source and the incorporation of mineral salts. These factors are analysed and standardised in order to obtain an optimal product.

As the strains used for preparing this probiotic feed produce lactic acid in high concentrations (between 30 g/l and 40 g/l) in both commercial culture media and those formulated on the basis of whey permeate, it is necessary to determine the amount of lactic acid capable of being produced when introducing the bacteria into solid substrates. The reason for this is that the reduction in pH in the silages is directly proportional to the addition of the carbon source and subsequent production of lactic acid. The latter increases proportionally with regard to culture time until reaching a relatively constant value after 48 h, due to the decrease in concentration of the carbon source.

An alternative to the fermentation of strains in raw protein sources (i.e., fish waste products, in particular from Chilean jack mackerel), is fermentation in fish meal, considered the best source of concentrated energy for animal feed, being composed of 70% to 80% of high quality protein. Tests are carried out at 35°C, incorporating both molasses as a source of carbon and inulin, a complex glucoside (polysaccharide) composed of molecular chains of fructose and considered a prebiotic. During the tests, the influence of these elements on the growth of the probiotic strains is determined. Three media were created, the composition of each of which is shown in Table 3:

**Table 3**

| Media type | Inoculum [%] | Molasses [%] | Meal [%] | Inulin [%] |
|:---:|:---:|:---:|:---:|:---:|
| A | 5 | 9 | 85 | 1 |
| B | 5 | 10 | 85 | -- |
| C | 5 | 8 | 85 | 2 |

The concentration of molasses and the addition of inulin are both observed to be influential. If the amount of molasses added to the medium is reduced and replaced by inulin, the maximum concentration reached in the stationary phase is practically the same (B and C curves in Figure 11). Although all three cultures reach similar maximum concentrations, A takes longer than B and C. Technically speaking, B, containing only molasses in a concentration of 10%, is best.

## Production of Feed Based on Fish Silage and Fish Meal

Once the silage reaches an acidity of pH 4.5, the solid phase can be used to produce fish feed according to the following formula:

**Table 4**

| Component | Amount [%] |
|:---:|:---:|
| Fishmeal | 35 |
| Silage (solid phase) | 35 |

(continued)

| Component | Amount [%] |
|---|---|
| Soybean | 14 |
| Wheat middlings | 8 |
| Fish oil | 5 |
| Cornstarch | 3 |

As shown in Table 4, raw protein (fish waste) is replaced by fish silage with a high percentage of probiotic biomass and other metabolites such as lactic acid, a product of the fermentation of the strain in the solid substrate.

In a typical fish feed production process, the total percentage of protein (around 70%) is composed of fish meal and fish waste products. This process consists of the following stages:

a) Putting the following into a fermenter: fish waste, a source of carbon and the inoculum of at least one probiotic strain; subsequent obtainment of a nutritional product with a high concentration of probiotic biomass after the fermentation period (48 h to 72 h), with a viable concentration equal to $10^9$ CFU/g.

b) Addition of nutritional components (fish meal, soybean, wheat middlings, fish oil and cornstarch) according to Table 4.

c) Cold extrusion of the mixture at ambient temperature to ensure that the process does not reach temperatures above 20°C.

d) Creation of pellets with a diameter of approximately 1.5 mm to 4 mm.

e) Drying of the pellets in a fluidised-bed dryer. Drying conditions: incoming air temperature, 40°C; drying time, 40 min to 60 min to obtain a product with a moisture content under 5% (wet basis).

When using fish silage, it is ideal to incorporate the probiotic strain at the stage in which the fish waste is treated (in the grinding container) so that the strain ferments in a homogeneous medium with the addition of the carbon source molasses at a concentration of 10%. Subsequently there is a drying stage to reduce the activity of water in the product and avoid reactions leading to the decomposition of the probiotic biomass and the raw protein (fish waste).

The advantages of the proposed process in which a drying stage is added to the production of probiotic salmon feed using fish silage are as follows: there is a reduction in the use of liquid culture media; the fermentation stage, with its corresponding energy waste, is avoided; and the stage where the biomass is separated from the culture media is unnecessary, as the silage is added directly to the mixture with the other ingredients.

Fishmeal in particular enables the addition of fermented probiotic biomass. This leads to two culture alternatives that are highly feasible, both technically and financially.

As it is necessary to preserve the nutritional properties and viability of the probiotic strain over a longer period of time, a drying stage is carried out before final storage of the product. As shown in Figure 11, the product remains viable to a degree higher than $10^8$ CFU/g for approximately 20 days, and to a degree above minimum requirements of $10^7$ CFU/g for 30 days. It is important to note that the product analysed was stored at ambient temperature (20°C, with airtight packaging and no light exposure).

The advantages of the probiotic feed developed are:

1) A feed is obtained to which a fresh probiotic strain is added in a solution. This commercial salmon feed has a low moisture content and a high bacterial concentration (8% to 9% and $10^8$ CFU/g, respectively), and remains viable for 15 days stored at ambient temperature, with concentrations higher than $10^7$ CFU/g (and concentrations higher than $10^6$ CFU/g for at least 91 days of storage). This applies to all types of feed formulated: LPS47, LPS148 and LPS28, LPT32 and LPT87. The weekly production capacity is 400.00 kg per batch, and if a higher capacity mixer is used, it is possible to obtain 1200.00 kg a week per batch, taking into account all stages involved (culture, separation, mixture and production of the final probiotic product).

2) Fermentation in a solid substrate is used to produce a feed based on fish silage with a probiotic strain -together with fish meal, soybean, fish oil, among others- that is pelletised with an extruder and dried in a fluidised bed at 40°C for 60 min, obtaining a product with a concentration of $10^8$ CFU/g, a moisture content lower than 10%, and a minimum concentration higher than $10^7$ CFU/g for 30 days while stored at ambient temperature (25°C). The best fermentation conditions are those of the medium composed of 10% molasses, 85% Chilean jack mackerel or fishmeal, and 5% inoculum, with an incubation temperature of 32°C.

3) Another aspect evaluated is the incorporation of probiotic biomass from the culture stage -after separation by centrifugation- into a pulverised feed with a subsequent extrusion stage that produces pellets of 1.5 mm, 2 mm and 4 mm. These are dehydrated in two drying operations: on a fluidised bed and with a vacuum dryer. Both options make it possible to obtain highly-viable feed ($10^8$ CFU/g) with a moisture content between 5% and 7%, where drying time is proportional to pellet size, independent of drying temperature.

4) A probiotic product is obtained by adding pulverised or powder feed and probiotic strains *Lactobacillus plantarum* LPS47, *Lactococcus lactis lactic* LPS148, *Pediococcus acidilactic* LPS28, *Pediococcus damnosus* LPT32 and/or *Lactobacillus plantarum* LPT87 to a fermenter in the stationary phase without centrifuging. The pulverised feed is subsequently dehydrated using spray drying. The strains are supported in the pulverised feed and survive for 6 months stored at 4°C and 20 days stored at 25°C, with a concentration higher than $10^7$ CFU/g, independent of dryer output temperature (Figure 12). After the fermentation phase, the result is mixed completely (without centrifuging) with the pulverised feed until a homogeneous solution at 10% solids is obtained. The spray dryer is fed at a constant pressure and the flow is regulated to control the desired output temperature of the product, for example, 70°C. Finally, the product is stored and a sample is extracted to determine final moisture and viability.

It is important to note that the product obtained, which is finely particulated, can be used to feed fish beginning in the first stage of their life cycle, i.e., their eclosion. It is a highly viable alternative for small-sized fish, or for the first feeding stages of salmonid alevins.

If larger pellet sizes are required as the fish develop, an additional agglomeration and pelletisation process is used to obtain any diameter required.

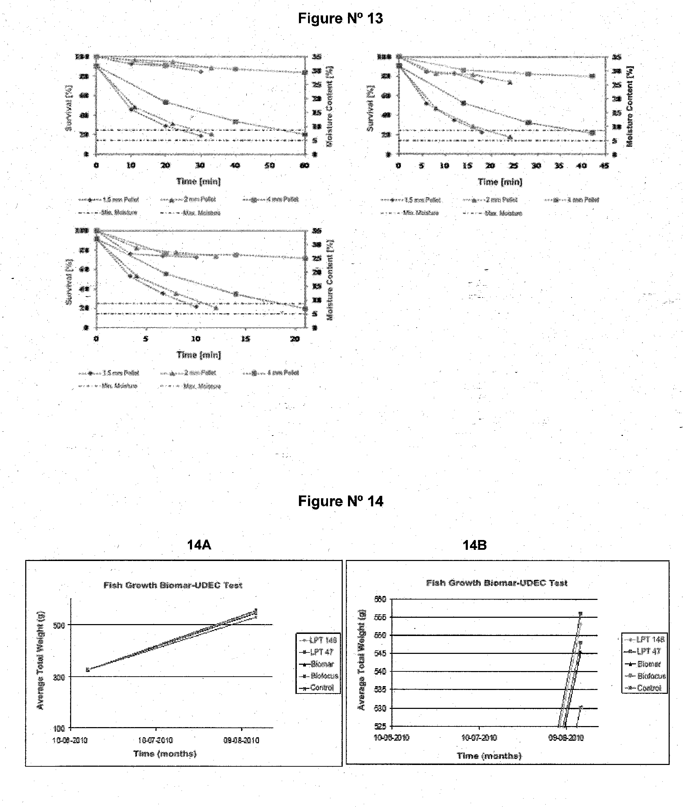

5) Finally, through drying in a fluidised bed, a probiotic product is obtained in which the strains are contained in the pelletised feed, with a moisture content varying between 6% and 7%, and a survival rate of 70% when dehydrated at 80°C and close to 100% when dehydrated at 60°C. It is determined that the transfer mechanism describing the process is that of diffusion, and that the diameter of the feed affects bacterial survival and time of exposure during drying (Figure 13).

Using field tests, the effect of various probiotic diets and commercial feed supplements is evaluated in terms of growth, measured as average total weight of the groups of the study, with samples being taken at the beginning and end of the test. A significant increase in weight is observed with regard to initial weight. The highest values correspond to the probiotic diets LPT148 and LPT47, and the lowest value is that of the control group. The growth results in terms of average total weight are positive, and the groups with probiotics show even better results (Table 5).

**Table 5**

| Diet | Difference in average total weight (g) |
|---|---|
| LPT 148 vs. LPT47 | -2.90 |
| LPT 148 vs. Biomar | 7.66 |
| LPT 148 vs. Biofocus | 5.03 |
| LPT 148 vs. Control | 22.86 |
| LPT 47 vs. Biomar | 10.55 |
| LPT47 vs. Biofocus | 7.92 |
| LPT47 vs. Control | 25.75 |
| Biomar vs. Biofocus | -2.63 |
| Biomar vs. Control | 15.20 |
| Biofocus vs. Biomar | 2.63 |
| Biofocus vs. Control | 17.83 |

The use of probiotics in the experimental groups during the test period (21 days) shows positive results in relation to average total weight with regard to the control group. Figure 15 shows the difference between initial and final fish weight (Figures 14A and 14B, respectively).

**APPLICATION EXAMPLES**

**Example 1: Isolation and Storage of the Microorganisms.**

In order to obtain the samples, the fish (approximately 20 specimens per fish farm) were dissected under aseptic conditions. Then a stomach and intestinal swab sample and a smear from the gills and skin were taken under sterile conditions and deposited in LBS *(Lactobacillus* selective medium) and MRS (Man, Rogosa and Sharpe) culture media and incubated for 48 h at 25°C. The cultures grown were placed in LBS agar plates in order to obtain well-defined colonies, and these were incubated for 48 h at 25°C under microaerophilic conditions. Subsequently, the various colonies were identified and transferred to MRS cultures, which were examined using Gram staining and the catalase test method. The gram-positive and catalase-negative organisms were selected and the strains obtained were stored at -20°C in yeast extract milk for subsequent analysis.

**1.1 Biochemical Identification of the Isolated Organisms.**

The cultures obtained, activated using three subcultures in an MRS medium, were centrifuged at 4000 RPM. Then the pellet was washed twice with a saline solution and suspended in 1 mL of this solution. Subsequently, samples of 100 $\mu$L were inoculated in the Gibson and gluconate media, 50 $\mu$L in the esculin, arginine, nitrate and indole media, and 25 $\mu$L in MRS media. The samples were incubated for 1 week at 25°C, except for the MRS media which were incubated at 15°C and 45°C. After this period, the results of the tests were obtained with Specific reagents, as appropriate.

**Example 2: Identification of Lactic Acid Bacterial Strains from Salmonids with Probiotic Activity using PCR-DGGE-16S rRNA.**

The strains were isolated from water, sediment and biological filter samples, but mainly from the gastrointestinal tract of salmonids. The strains were numbered and named Salmon Probiotic Lactobacillus (LPS) and Trout Probiotic Lactobacillus (LPT). Strains were stored in yeast extract milk at a temperature of -20°C, activated in a MRS medium at 32°C for 24 h, subcultured twice for 12 h, and then inoculated in a plate to ascertain purity.

**2.1 DNA Extraction.**

Urea-SDS-NaOH was used for the DNA extraction. A volume of 1.0 mL of 15-hour bacterial culture was centrifuged at 10 500 RPM for 3 min. The supernatant was discarded and the bacterial pellet was washed three times with PBS (phosphate buffered saline), pH 7.4. Subsequently, the pellet was once again washed with PCR water (MQ-H$_2$O, autoclaved twice). Then, the pellet was re-suspended in 0.5 mL of 6M urea, 0.1 mL of SDS 10% (Sodium dodecyl sulfate) being added. The mixture was incubated at 37°C for 20 min in a thermoregulated bath, followed by incubation at 100°C for 5 min. After the incubation period, the mixture was centrifuged once again at 13 300 RPM for 10 min at 25°C. The supernatant was eliminated and 0.1 mL of 0.2 N NaOH was added to the pellet, which was then incubated at 37°C for 10 min, followed by a centrifugation of 8200 RPM for 3 min at 25°C. The pellet was discarded and the supernatant was transferred to a new tube. The supernatant was mixed with 2.5 volumes of absolute ethanol and the DNA was precipitated for 2 h at -20°C. Finally, it was centrifuged at 14 500 RPM for 15 min at ambient temperature. The supernatant was discarded and the DNA was sedimented and washed with ethanol 70%. Finally, the pellet was re-suspended in 20 $\mu$L of TE (Tris-EDTA) buffer. After extraction, the DNA content was quantified.

**2.3 Determining MOTU in Cultures.**

*2.3.1 Polymerase Chain Reaction (PCR) with Denaturing Gradient (DGGE).*

For DNA amplification, for bacteria 341-F and 907-R universal primers were used that amplify a segment with a size of approximately 600 pb of the gene 16S rRNA (Table 6). A GC-enriched group of approximately 28 pb was added to primer 341. Each 50 $\mu$L of reaction for PCR contain 10 $\mu$L of 5X buffer, 3.5 mM of MgCl$_2$, 200 $\mu$M of dNTPs mixture, 1 mM of each primer, 1.25 U of *Taq* polymerase, 29.75 $\mu$L of PCR water and 1 $\mu$L of the DNA extraction. The amplification is carried out with the following temperature programme: initial denaturation at 94°C for 3 min; 30 cycles of 94°C for 45 seconds; 52.5°C for 45 seconds; 72°C for 2 min; and a final elongation at 72°C for 7 min.

**Table 6**

| Primer | Sequence (5' - 3') |
|---|---|
| 8 -F | AGA GTT TGA TCC TGG CTC AG |
| 341 -F* | CCT ACG GGR GGC AGC AG |
| 907 -R | CCC GTC AAT TCC TTT GAG TTT |

### 2.3.2 Electrophoresis of PCR Amplicons.

The PCR products were analyzed in agarose gel at 1% for 30 min with 100 V. Subsequently, the agarose matrix was stained in a solution of ethidium bromide and then washed in distilled water and transferred to a photodocumentation device where it was visualized and photographed.

### 2:3:3 DGGE Test.

The electrophoresis was carried out in a DGGE detection system, at a concentration of 6% of polyacrylamide (acrylamide/bisacrylamide, 37, 5:1). The denaturating gradient developed was 20% to 80% (urea/formamide), where 100% denaturant equals 7 mol $\times$ L$^{-1}$ and 40% (v/v) formamide. Finally, denaturant concentrations of 30% to 60% and 45% to 53% were reached, according to band displacement. After gel preparation, the wells were loaded with 40 $\mu$L of the PCR-DGGE product together with 10 $\mu$L of load buffer. The gel is run at 100 V at 60°C for 10 h. Then, the polyacrylamide matrix was stained by immersion in a solution of EtBr. Finally, the matrix was mounted on a photodocumentation device, visualised and photographed.

### 2.3.4 DGGE Band Analysis.

Once the images from polyacrylamide gels using DGGE were obtained, the relative frequency indices ($R_f$) were calculated for each band detected in relation to the displacement of a reference band, specifically using reference bands identified in ATCC 8014, according to the following expression:

$$R_f = (M_r\, X) \times (M_r\, Ref.)^{-1}$$

where $R_f$ is relative frequency, $M_r$ is the relative mobility of the bands, X is the bands of the cases studied, and Ref. is the reference band. This made it possible to determine the number of molecular operational taxonomic units (MOTU).

**2.4 Determination of Phylogenetic Relationships among LPS Strains.**

### 2.4.1 Obtainment of Bands Using DGGE.

The bands were cut and placed in micro-tubes that had been previously marked according to the order of the bands to be obtained. Once obtained, they were left in agitation for a period not shorter than 12 h. After 12 h, the micro-tubes were stored at - 20°C in a freezer.

### 2.4.2 PCR for Cloning.

The DNA amplifications from the extractions of the strains were carried out with the universal primers for bacteria 8-F and 907-R (Table 6) that amplify a segment with a size of approximately 900 pb of the 16s rRNA gene. Each 100 $\mu$L of reaction for PCR contain 20 $\mu$L of 5X buffer, 7 mM of MgCl$_2$, 400 $\mu$M of dNTPs mixture, 2 mM of each primer, 2.5 U of *Taq* polymerase, 59.50 $\mu$L of PCR water and 2 $\mu$L of the DNA extraction. Finally, the PCR reaction was carried out with the following temperatures: initial denaturation at 94°C for 3 min; 30 cycles of 94°C for 45 seconds; 53.8°C for 45 seconds; 72°C for 2 min; and a final elongation at 72°C for 7 min.

### 2.4.3 Electrophoresis of Amplicons for Cloning.

The PCR products were separated in an agarose gel at 1% for 45 min to 50 min at 100 V. Then, the agarose matrix was stained in an EtBr solution for 15 min and subsequently visualised and photographed. The bands were cut and purification was carried out with a commercial kit.

### 2.4.4 Cloning Process.

#### Ligation.

The purified PCR product was ligated to the pGEMT-Easy vector (50 ng) using an insert-vector ratio of 3:1 (molar) in a final volume of 10 $\mu$L. The ligation reaction was incubated for 12 h at 4°C.

#### Transformation.

Subsequently, 4 $\mu$L of the ligation product (recombinant plasmid) were transformed into 50 $\mu$L of *E. coli* JM109 competent cells using thermal shock. The transformed bacteria were placed in agar/LB (Luria-Bertoni) plates with Beta-galactosidase (50 mg $\times$ mL$^{-1}$) and ampicillin (100 $\mu$g $\times$ mL$^{-1}$), enabling the identification of the bacteria of the recombinant plasmid.

### 2.4.6 Confirmation of the Clones.

The confirmation of the positive clones was carried out using colony PCR in a final reaction volume of 10 $\mu$L, containing 0.2 mM of dNTPs mixture, 2.0 mM of MgCl$_2$, 20 pmoles of each specific primer; 8-F and 907-R, 1X *Taq* polymerase buffer, 2.5 units of *Taq* polymerase and 3 $\mu$L of bacterial colonies re-suspended in PCR water. The amplification programme used was: initial denaturation at 95°C for 10 seconds; 30 cycles of 95°C for 30 seconds; 53.8°C for 30 seconds; 72°C for 2 min; and a final extension at 72°C for 7 min. The complete PCR mixture was fractionated in a 1% agarose gel and the bands were visualised through staining of the gel with EtBr and exposure in a UV transilluminator.

### 2.4.7 Plasmid Extraction.

The positive clones were placed in agar/LB plates with ampicillin (100 $\mu$g $\times$ mL$^{-1}$), and incubated at 37°C for 12 h for growth and storage. The positive colonies were cultured in an LB liquid medium with ampicillin, and the plasmid DNA was purified with a commercial kit. The plasmids extracted were quantified in a BioPhotometer. The plasmids were also subjected to an electrophoretic process to observe bands corresponding to the size of the plasmid ($\approx$3000 pb) and the ligated plasmid/segment of interest ($\approx$4000 pb).

### 2.4.8 Sequencing.

Sequencing of the purified plasmids containing the insert of a region of $\approx$ 900 was carried out in both reading directions using the specific primers for pGEM-T Easy SP6 and T7, making it possible to obtain the complete sequence of the amplified segment.

### 2.4.9 Bioinformatic Analysis.

The sequences obtained were cleaned and subsequently aligned with existing sequences for the 16s rRNA gene using a multiple alignment software. The determination, assignation of identity and analysis of relationships between the phylotypes for the clones sequenced were carried out aligning and comparing the said sequences with other sequences available online for the genus *Lactobacillus* and others, using the Linnaeus BLAST tool. Finally, a UPGMA phylogenetic tree was generated with the sequences corresponding to the one identified and others.

### Example 3: Evaluation of the Adherence of Probiotic Strains.

#### <u>*-Salmon*</u>

The mucus samples were obtained from healthy specimens of the species *Salmo salar,* weighing between 3000 and 4000 g. The fish were not fed for 72 h, allowing complete elimination of food matter from the gastrointestinal tract.

In order to obtain mucus samples from the salmon skin, a small amount of PBS was applied to the complete surface, which was subsequently scraped with a silicone spatula, extracting the largest amount of mucus possible. The mucus from the gills was extracted scraping the gills with a spatula, avoiding the contamination of the sample with blood from the specimen itself. To obtain the gastrointestinal mucus, the stomach was first separated from the intestine and both were placed in a tray and washed with PBS (pH 7.2). Then, the stomach and intestinal mucus was collected by scraping the internal surface of the tissue with a spatula. The samples obtained were stored in glass containers at -20°C for their subsequent filtration.

The mucus preparations obtained were homogenised and centrifuged twice at 8000 RPM for 20 min at 4°C. The final supernatant was filtered with an increasing degree of fineness in a vacuum system, using a filter paper of 2.5 $\mu$m for the first filtration, and nitrocellulose membranes with a 47 mm diameter and a fineness of 0.45 $\mu$m and 0.2 $\mu$m for the following filtrations. The mucus samples were adjusted to 0.5 mg of protein/mL in PBS. Protein concentration was determined using the Bradford method, and the different types of mucus were stored separately in glass containers at -20°C for subsequent use.

**3.1 Staining of Strains with Fluorochrome and Determination of Calibration curves.**

**3.1.1 Obtainment of the Bacterial Solutions Stained with CFDA-SE.**

Prior to the staining of the strains, the bacterial solutions were washed twice with 200 $\mu$L of PBS (7 mmol L$^{-1}$, pH 7.3), re-suspended in 5 mL of PBS (7 mmol L$^{-1}$, pH 7.3), and the bacterial solution was adjusted to 0.5 $\pm$ 0.05 (at an optical density of 625 nm). For staining, 100 $\mu$mol L$^{-1}$ of CFDA-SE (Carboxyfluorescein Diacetate Succinimidyl Ester) were added to each standardised solution, incubated at 37°C for 30 min in a Dubnoff bath, and subsequently washed twice with 200 $\mu$L of PBS (7 mmol L$^{-1}$, pH 7.3) and re-suspended in 5 mL of PBS (7 mmol L$^{-1}$, pH 7.3).

**3:1:2 Calibration Curves.**

A calibration curve was developed for each of the lactic acid bacteria used, for which 3 dilutions of the bacterial solutions ($1*10^3$, $1*10^5$ and $1*10^8$ CFU/mL) stained with CFDA-SE were prepared. Each bacterial solution was inoculated in triplicate in the microtitre plate, incubated at 25°C for 1 h and subsequently lysed with lysis buffer and incubated at 25°C for 1 h. Then, the fluorescent intensity of the supernatant was measured at excitation and emission wavelengths of 492 nm and 517 nm, respectively.

**3.1.3 Adherence Tests of Stained Bacteria to the Mucus.**

The standardised mucus (0.5 mg/mL) was passively immobilised, 100 $\mu$L of the solution being placed in microtitre plate wells and incubated at 4°C for 12 h. After incubation, the mucus was washed once with 250 $\mu$L of PBS to eliminate non-adhered bacteria. A volume of 100 $\mu$L with an approximate concentration of $10^7$ CFU/mL of cells stained with the fluorochrome was added to the wells, incubated at 25°C for 1 h. Then the wells were washed twice with 250 $\mu$L of PBS to eliminate non-adhered bacteria. The adhered bacteria were isolated and lysed with 100 $\mu$L of lysis buffer, being incubated at 25°C for 1 h. The adherence percentage was obtained by measuring the fluorescence with the fluorometer and analysing the equation determined by the previously established calibration curve.

**3.1.4 Antibacterial Tests of the Selected Strains in Salmon Mucus.**

In order to determine the interactions between the lactic acid strains and the pathogens, a volume of 100 $\mu$L of solution containing non-stained lactic acid strains at a concentration of $10^8$ cel/mL was added, these being inoculated into microtitre plates containing mucus, and the result was incubated at 25°C for 1 h. Then, the wells were washed twice with 250 $\mu$L of PBS. 100 $\mu$L of a solution of fish pathogens ($10^8$ cel/mL) stained with fluorochromes were added in triplicate to the wells, both with and without probiotics, and incubated at 25°C for 1 h. The wells were subsequently washed and the adhered bacteria were isolated and lysed with 100 $\mu$L of lysis buffer, being incubated at 37°C for 1 h. Fluorescence was measured in the fluorometer. In this case, the inhibition percentage of the adhesion was calculated as the difference between the adhesion of the pathogens with and without the probiotic strains and the potential inhibition of the probiotics. Each test was carried out in quadruplicate.

**3.1.5 Statistical Analysis.**

The data obtained from the tests carried out in quadruplicate were statistically analysed with ANOVA and Duncan tests using the statistical programme.

**_-Trout_**

Rainbow trout specimens of similar size and weight (approximately 150 g) were sacrificed, and samples of tissue from the stomach, intestines, gills and skin were aseptically obtained and immediately placed in a buffer solution (50 mM $NaH_2PO_4$, 8.2 mM glucose, and 0.01% gel), pH 7.2. Then a sonic bath was carried out at a nonlethal frequency of 35 kHz for 7 min in order to remove the existing bacteria from the different surfaces. Subsequently, the tissue samples (1 g samples for gills and intestine and 1 $cm^2$ samples for skin and stomach) were washed repeatedly and re-suspended in PBS buffer.

The activated *Lactobacillus* spp. strains were centrifuged at 4000 RPM for 15 min, washed with PBS and suspended until reaching $OD_{600}$ 0.25 $\pm$ 0.1 equivalent to $10^7$-$10^8$CFU/mL. 1 mL of this bacterial suspension was inoculated with the tissue to be evaluated, at a constant agitation of 130 RPM for approximately 1 h. Subsequently, new washes with PBS were carried out to eliminate non-adhered bacteria and a nonlethal sonication was applied for 12 min to detach the adhered lactic bacteria from the epithelium. The lactic bacteria were suspended in a sterile saline solution and quantified through inoculation into the *Lactobacillus* Selective Medium. The results were expressed in terms of CFU/g or CFU/$cm^2$ on a wet weight basis. This test also included a control group, where a tissue sample was monitored without the bacterial inoculum, but with 2 mL of sterile PBS.

**Example 4: Antibiotic Susceptibility Analysis of *Lactobacillus plantarum* Strains with Probiotic Potential.**

**4.1 Microorganisms and Growth Conditions.**

Reference strains: *Staphylococcus aureus* ATCC 29213, *Escherichia coli* ATCC 25922.

Lactic strains isolated from salmon samples: *Lactobacillus plantarum* LPS47, *Lactococcus lactis lactis* LPS148.

The reference strains were cultured in CASO Agar (Casein-peptone Soymeal-peptone Broth), and the lactic strains were subcultured twice in MRS medium.

**4.2 Antibacterial Agents.**

Commercial antibiotic disks with different antibacterial action mechanisms were used:

-Cell wall synthesis inhibitors:

Penicillin G (10 U), ampicillin (10 $\mu$g), cefazolin (30 $\mu$g), ampicillin/sulbactam (25 $\mu$g), teicoplanin (30 $\mu$g), vancomycin (30 $\mu$g).

-Protein synthesis inhibitors:

Gentamicin (10 $\mu$g), streptomycin (10 $\mu$g), oxytetracycline (30 $\mu$g), chloramphenicol (30 $\mu$g), erythromycin (15 $\mu$g), clindamycin (2 $\mu$g), linezolid (30 $\mu$g).

-Nucleic acid synthesis inhibitors:

Sulfamethoxazole/trimethoprim (25 $\mu$g), trimethoprim (5 $\mu$g), ciprofloxacin (5 $\mu$g), moxifloxacin (5 $\mu$g), flumequine (30 $\mu$g), oxolinic acid (2 $\mu$g).

**4.3 Susceptibility Tests.**

The susceptibility of 19 antibacterial agents was studied in the LSM, MRS and LAPTg lactic acid culture media and in Miller-Hinton agar.

The susceptibility profile of the reference strains *Staphylococcus aureus* ATCC 29213 and *Escherichia coli* ATCC 25922, used as a control, was assessed (culture medium, potency and diffusion of the antibiotic disks, and concentration).

The reference microorganisms were incubated at 37°C for 18 h in trypticase broth and the lactic strains were incubated at 30°C for 18 h in MRS broth. A suspension of each strain was adjusted to McFarland 0.5 in a turbidimeter ($10^8$ CFU/mL) and subsequently spread homogeneously across the surface of agar plates with a sterile swab. The lactic strains and the strain *S. aureus* ATCC 29213 were inoculated in LSM, MRS, LAPTg and Miller-Hinton agar. The strain *E. coli* ATCC 25922 was inoculated in LSM and Miller-Hinton agar.

The antibiotic disks were placed on the surface of the agar and the plates were incubated at 37°C for 24 h in the case of the reference strains, and at 30°C for 24 h to 48 h in the case of the lactic strains. After incubation, the diameter of the inhibition halos was measured. The lactic strains were assessed after 24 h and 48 h of incubation, as different studies set forth these times for antibacterial assessment in lactic acid strains.

**Example 5: Resistance of Lactic Acid Strains to Marine Salinity Levels.**

In order to determine the effect of high salinity levels on the probiotic activity of the microorganisms isolated, an interaction test with pathogens was carried out. It must be noted that the action of salts in the culture medium was not expected to cause significant variations in terms of the effectiveness of the strains. For the process, the agar diffusion method was used subsequent to the application of saline stress. First, the activation and preparation of the lactic acid bacteria from salmon were carried out. The selected strains were activated in seawater (37 ppm), with two 24-hour subcultures, McFarland scale 0.5 at 625 nm - 0.1 to 0.085, approximately ($10^8$). Centrifugation at 4000 RPM for 10 min was carried out, in addition to two washes with 2 mL of sterile saline solution, until obtaining a spectrophotometric reading of 0.2 at $OD_{625}$. Subsequently, each re-suspension was inoculated in MRS agar plates and incubated at 25°C for 24 h until achieving the necessary colonisation.

**5.1 Activation and Peparation of the Pathogens.**

The fish pathogen strains *Vibrio anguillarum, V. ordalli, Streptococcus phocae, Pseudomonas fluorescens, Edwarsiela tarday* and *Aeromonas sobria* were activated, washed, adjusted and subsequently inoculated into petri plates with 25 mL of TSA and TYES agar, according to each case.

In the case of the *Lactobacillus* spp. strains, agar disks with a diameter of 5 mm were cut under sterile conditions from the plates with positive lactic strain growth. These were  deposited onto the plates with pathogens, the agar disk with the lactic strain facing downwards, in direct contact with the pathogens. These discs were positioned in such a way as to produce direct or indirect contact between the organisms in the interaction test. Subsequently, incubation was carried out at 20°C for 24 h, and the inhibition halos corresponding to the action of each lactic acid strain were measured in millimetres.

**Example 6: Resistance to Hydrochloric and Acetic Acid with Inhibitory and Bactericidal Activity.**

A set of tubes with 2 mL of MRS broth and increasing concentrations of the corresponding acid was prepared. The pH range for the acids was pH 2.4 to pH 5.3 for the acetic acid, and pH 1.2 to pH 6.0 for the hydrochloric acid. Lactobacillus strain susceptibility to the ascetic and hydrochloric acids was assessed with the serial dilution technique in a liquid medium. After the last activation of the lactic strains, these were diluted to a final concentration of $5x10^5$ CFU/mL using the following technique:

A final concentration of $5x10^5$ CFU/mL of the corresponding strain was obtained from the medium with the activated strain. From this last tube, inocula of 100 μL were extracted and inserted into a set of tubes with 2 mL of MRS broth and increasing concentrations of the acid studied. Negative control was provided by tubes with MRS broth and varying concentrations of the corresponding acid. The positive controls were MRS broths with the bacterial strains. All tubes were incubated at 20°C for 20 h with agitation (90 RPM).

A spectrophotometric reading at $OD_{540}$ nm was carried out for all tubes before and after incubation. In order to determine minimum bactericidal pH, inocula of the tubes without bacterial development after 20 h of incubation were placed in MRS agar plates and incubated at 25°C for 24 h. The pH of the tube without bacterial development after inoculation into MRS agar plates was defined as the minimum bactericidal pH for the strain studied.

**Example 7: Evaluation of the Colonisation of the Strains LPS47 *Lactobacillus plantarum* and LPS148 *Lactococcus lactis lactis* in the Gastrointestinal Tract of *Oncorhynchus kisutch* Using Bioassays.**

**7.1 Microorganisms.**

The bacterial strains studied are microorganisms LPS47 *Lactobacillus plantarum* and LPS148 *Lactococcus lactis lactis.*

**7.2 Experimental Design.**

200 Coho salmon specimens were conditioned in 400 L tanks with dechlorinated potable water, an aeration system and controlled temperature (10°C to 14°C). The fish were then separated into different treatments, each carried out in triplicate:

Treatment A: Basic feed supplemented with strain LPS47 *Lactobacillus plantarum.*

Treatment B: Basic feed supplemented with strain LPS148 *Lactobacillus lactis.*

Treatment C: Basic feed (negative control).

Groups receiving treatments A and B were fed with the probiotic diet for 15 days, after which they were fed with the same basic diet received by the other groups.

**7.3 Microbiological Analyses.**

A staining technique with a selective agent (Rifampin) is used to determine bacterial viability in the tissue samples. The strains LPS47 and LPS148 were inoculated into media containing rifampin with a concentration gradient. The colonies that appeared in the zone with the highest antibiotic concentration were isolated and subjected to minimum inhibitory concentration (MIC) and minimum bactericidal concentration (MBC) tests. The efficacy of the method was also tested by inoculating samples of resident flora from fish, as well as pure cultures of the strains used in this study, into media with and without rifampin.

**Transitory bacteria:** The complete gastrointestinal tract (GIT) of each fish was removed, treated to eliminate food residues and irrigated with 5 mL of saline solution, of which 100 $\mu$L were inoculated in MRS media with rifampin in corresponding dilutions. The samples were then incubated at 25°C for 24 h.

**Bacteria adhered to the GIT:** Once the GIT had been treated using the previous method, it was divided into stomach and intestines and the internal surface of each was once again irrigated with 5 mL of saline solution to detach non-adhered microbes. The samples were macerated and a sonic bath was applied with a nonlethal frequency of 35 kHz for 10 min in order to detach the highly-adhered bacterial flora. 100 $\mu$L of the sample were inoculated into MRS media with rifampin and subsequently incubated at 25°C for 48 h.

**7.4 Water Samples.**

Fish culture water was monitored three times by taking samples from each tank, inoculating them into MRS media with rifampin and incubating at 25°C for 48 h.

**7.5 Statistical Analysis.**

The growth results obtained in the MRS plates in the different groups and treatments were registered and analysed using Microsoft Excel sheets. The data were then subjected to statistical analysis. The difference between treatments was analysed using the ANOVA repeated measures test.

**Example 8: Assessment of the Immunostimulant Effect of Lactic Acid Bacterial Strains Isolated from Salmonids.**

A group of 150 rainbow trout juveniles was used with an approximate weight ranging from 20 g to 40 g. The fish were conditioned for 30 days in 800 L tanks under constant aeration. Potable, previously dechlorinated freshwater was used and changed every 48 h. The fish were fed with commercial pellets, at 1 % of biomass per day.

**8.1 Strain Obtainment and Culture**

The strains used were LPS148 and LPS47, previously isolated and characterized from the digestive tract of salmonids.

**8.2 Bioassay Design**

The lactic strains kept at -20°C were cultured in MRS broth at 25°C. The fish were transferred from the stock tank to 3 new tanks of equal volume and maintained under the same conditions described previously, with 40 fish per tank. Temperature and mortality were registered daily. After a fasting period of 48 h, the fish were fed according to the following scheme for 28 days and at 1% of biomass:

✔ Group A: 40 specimens fed with a probiotic diet, strain LPS148.
✔ Group B: 40 specimens fed with a probiotic diet, strain LPS47.
✔ Group C (control): 40 specimens receiving commercial feed without probiotics.

On days 14, 21 and 28, six fish from each tank were sacrificed to carry out hematological and immunological tests. The fish were sacrificed by a blow to the head, and the largest amount of blood possible was obtained by puncturing the caudal vein. Cuts were then carried out to the branchial arches in order to drain the blood completely and the fish were sprayed with 70% alcohol to extract the kidneys under aseptic conditions. Tests were carried out to determine haematocrit, total blood cell count, concentration of total plasmatic proteins, and concentration of total antibodies (IgM).

**8.3 Respiratory Burst with Chemiluminescence.**

A primary culture of renal macrophages was prepared from the anterior kidney of six fish and the cells were isolated with a percoll gradient. Cell concentration was adjusted to $1 \times 10^8$ cells per $mL^{-1}$. Subsequently, 200 $\mu$L of phagocytic cells were added to a 96-well chemiluminescence plate, and 70 $\mu$L of luminol per well were immediately added, followed by 70 $\mu$L of zymosan. The plates were read immediately in a multidetector device programmed for luminescence at intervals of 2 min until 20 readings had been completed.

**8.4 Phagocytosis Test.**

The suspension of macrophages was obtained from renal tissue as described in the previous item. 70 $\mu$L of phagocytic cells were placed on a microscope slide and incubated for 1 h in a moisture chamber. These were then washed twice in an L-15 medium and 70 $\mu$L of suspensions of inactivated and opsonised cells of *Sacharomyces cerevisiae, Vibrio ordalii, Aeromonas salmonicida* and *Staphilococcus aureus,* together with zymosan particles, were added. Incubation was carried out for 1 h in a moist chamber and samples were taken every 20 min to be set in methanol, stained with May-Grünwald Giemsa and subsequently observed under an optical microscope to count the microorganisms phagocytised.

**8.5 Statistical Analysis**

ANOVA analysis was used and a Tukey multiple test was carried out with 95% reliability for the variables showing significance between treatments in order to determine the best treatments. $P < 0.05$ was considered a statistically significant difference. Data are shown as average $\pm$ standard error.

**Example 9: Assessment of the Protective Effect of Probiotic Strain LPS47 Incorporated into Feed in a Challenge Test Carried out on Coho Salmon with *Aeromonas salmonicida.***

A total of 80 non-vaccinated Coho salmon specimens (average weight 35 g) were acclimatised for 20 days in 800 L tanks with dechlorinated freshwater, under conditions of constant aeration and controlled temperature. During this time they were fed a standard commercial diet. Subsequently, the fish were randomly divided into two experimental groups of 40 specimens each and placed in circular 400 L tanks.
For a period of 15 days, one of the groups received probiotic feed (strain LPS47), whereas the control group continued with commercial feed. Then both groups were challenged with a virulent strain of *Aeromonas salmonicida,* administered intraperitoneally. After the challenge, the probiotic group continued with the diet supplemented with strain LPS47 for 10 more days.
Temperature and water quality were measured daily. All dead fish underwent complete necropsy to determine the cause of death.

**Example 10: Assessment of the Protective Effect of Diet Supplementation with Two Probiotic Strains in a Challenge Test Carried out on Rainbow Trout Alevins *(O. mykiis)* using *Flavobacterium psychrophilum.***

**10.1 Culture of *Flavobacterium psychrophilum* and Microbiological Characterisation**

The *F. psychrophilum* strain UDEC03 obtained from rainbow trout was used and kept in liquid nitrogen at -196°C. The strain was unfrozen and cultured in TYES agar at 15°C for 48 h to 96 h. Characterisation of the strain included direct observation of the colony characteristics, Gram staining and motility, catalase, oxidase, elastinase, API ZYM and PCR tests.

***10.2 In vivo* Activation of Virulence.**

A group of 50 rainbow trout alevins (1 g to 2 g) was used. The fish were conditioned in 80 L tanks for 12 days, with a preventive sanitary treatment of formaldehyde and salt.
The water was changed every other day and the fish were fed with a maintenance diet at 1%.

The challenge was carried out as published in Madsen and Dalsgaard (1999). The fish were subjected to stress by exposing them to a formaldehyde bath (0.005%) for 30 min, and subsequently transferred to a 200 mL container with a suspension of *F. psychrophilum* at a previously established concentration. The fish were kept in this container for 1 h and then returned to their original tanks.

Temperature and mortality were monitored daily. Dying fish and fish that had died recently underwent complete necropsy to determine the exact cause of death. TYES and TSA plates were inoculated from the internal organs to recuperate the bacteria, which were isolated at 15°C and 20°C, respectively, for a total of 72 h. The bacterial colonies obtained were analysed and characterised as previously stated.

**10.3 Fish Diet Supplementation with Probiotics and a Challenge Test.**

The fish used were 200 rainbow trout alevins weighing between 2 g and 4 g, which were conditioned for 14 days in 400 L tanks with aeration and a maintenance diet at 1%, as well as a preventive treatment based on formaldehyde and salt. Water was changed every other day. In order to eliminate the possibility of asymptomatic carriers of *F. psychrophillum,* three fish were sacrificed and subjected to necropsy and microbiological examination.

At the beginning of the test, the fish were divided into 4 groups with 40 fish per tank (except for one control tank with only 25 individuals). The fish subjected to a supplementation with probiotics began to receive the strain LPS148 or LPS47 in their diet on day 26 before the challenge.

The fish were challenged via intraperitoneal inoculation of a suspension of a virulent strain of *F. psychrophilum* that had been previously isolated *in vivo.* Each fish, previously anesthetised with BZ 20, received an inoculum of 100 $\mu$L of the bacterial suspension ($OD_{600}$ = 0.5). The two control groups were injected with 100 $\mu$L of sterile saline solution.

After the inoculation, the alevins were returned to their respective tanks. Treatment was grouped as follows: feed with probiotic strain LPS47; feed with probiotic strain LPS148; and commercial feed (positive control). The alevins injected with saline solution (negative control) also received commercial feed.

Temperature and mortality were registered daily. Dying fish and fish that had died recently underwent complete necropsy to establish the cause of death. TYES and TSA plates were inoculated from the internal organs to recuperate the bacteria, which were isolated at 15°C and 20°C, respectively, for a total of 72 h. The bacterial colonies obtained were analysed and characterised as previously stated.

**Example 11: Production of Probiotic Feed.**

**11.1 Growth in Solid Substrates.**

The fish waste is ground and the carbon source is added. The result is homogenised in a mixer and the probiotic strain is added at an OD of 0.5 at 625 nm. The culture is carried out in closed glass containers for 24 h to 36 h. PH and bacterial viability are monitored constantly.

**11.2 Preparation of a Probiotic Feed with a Fresh Strain.**

The probiotic strain desired is cultured in a 3 L fermenter at 32°C for 24 h and centrifuged for 15 min at 8000 RPM at 4°C. The supernatant is eliminated and sterile saline solution is added to the sedimented biomass with a culture medium:saline ratio of 4:1. Batches of 20 kg of feed are loaded into the solid mixer and the bacterial suspension is added. The device is closed and undergoes agitation for 30 min. The feed is then packed into plastic bags and a representative sample is extracted to determine moisture and viability. The feed is stored in a cool and dry environment for its subsequent use.

**11.3 Preparation of Feed from Fish Silage.**

The probiotic strain is cultured in the solid substrate. After the fermentation period, the silage is mixed with the other feed components: fish meal, wheat middlings, soybean and fish oil. Pellets of various sizes are produced with an extruder and samples are taken to measure moisture and viability. Feed is stored for subsequent use.

**11.4 Drying of Probiotic Feed in a Spray Dryer.**

The probiotic strain is cultured. After the fermentation period, the result (without centrifuging) is mixed completely with pulverised feed until a homogeneous solution at 10% solids is obtained. The spray dryer is fed at a constant pressure and flow is regulated to control the output temperature of the desired product (e.g. 70°C). The final product is stored and a sample is taken to determine final moisture and viability.

**11.5 Drying of Probiotic Feed in a Fluidised-Bed Dryer.**

The fan that feeds air into the system and the electric coils that heat it are turned on. Drying temperature is selected with the control panel, and while the system reaches stationary state, equal batches of probiotic feed (previously pelletised in an extruder) are weighed. Each batch is loaded and the temperature sensors are installed, one for controlling input air temperature and the other for controlling output air temperature. The product is dried until reaching a moisture content below 10%.

**11.6 Drying of Probiotic Feed in a Vacuum Dryer.**

The electric coils are turned on and the temperature for the drying tests is set with the control panel. Approximately 300 g of feed of a specific pellet diameter are weighed and loaded into the device. The drying chamber is closed and the vacuum pump is turned on. Drying is carried out until moisture content is below 10%.

As amounts greater than 100 kg of probiotic feed per week have to be produced for the *in vivo* fish culture tests, it is necessary to study the viability effect of adding the fresh probiotic biomass to commercial feed under storage conditions and at ambient temperature (i.e., the real conditions to which the product will be exposed in the tests).

Commercial feed is used, with an approximate moisture content of 6% to 7%. An important requirement when preparing feed with fresh biomass is to minimise the addition of water. The process is therefore designed so that the final moisture content of the probiotic product does not exceed 9%. For this purpose, it is necessary to centrifuge the bacterial culture and re-suspend the biomass in a sterile saline solution with a culture:solution ratio of 4:1. With regard to bacterial concentration, the culture:feed ratio is 1:20; in other words, every 1 litre of bacterial culture can be used to prepare 20 kg of feed, with an average concentration of $10^8$ CFU/g. Considering that the current fermenter has a capacity of 20 L, the operational capacity of the pilot plant is 400 kg per batch per week. However, if the size of the mixing equipment were increased to a capacity of, for example, 400 kg, production could even be increased to 1200 kg a week (taking into account culture time, biomass harvesting and disinfection of the mixing equipment).

**Example 12: Effect of the Different Test Diets on the Growth of Rainbow Trout as a Function of Weight.**

A total of 1000 *Oncorhynchus mykiss* rainbow trout specimens weighing between 200 g and 250 g were used. In the first stage, the animals were divided into two 7 m$^3$ tanks with a partial-recirculation water system, where they were subjected to antimicrobial therapy for 14 days. Subsequently, the fish were divided into 5 experimental treatment groups and analyzed microbiologically and anatomically.

*1)* **Probiotic LPT148:** Probiotic feed developed by *Innova Chile* Project 05CT6PP-13 based on *L. lactis* strain LPT148.
*2)* **Probiotic LPT47:** Probiotic feed developed by *Innova Chile* Project 05CT6PP-13 based on *L. plantarum* strain LPT47.
*3)* **Biomar:** Commercial probiotic feed acquired by Biomar.
*4)* **Biofocus:** Biomar food supplements.
*5)* **Control:** Commercial feed sold by the company Biomar.

**Claims**

**1.** A process for the production of a probiotic feed, appropriate for fish, based on fish silage and **CHARACTERISED by** the following steps:

a) putting the following into a fermenter: fish waste products, a source of carbon and an inoculum of at least one probiotic strain consisting of *Lactobacillus plantarum* LPS47, *Lactococcus lactis lactis* LPS148, *Pediococcus acidilactic* LPS28, *Pediococcus damnosus* LPT32 and/or *Lactobacillus plantarum* LPT87;
b) addition of nutritional components consisting of fish meal, soybean, wheat middlings, fish oil and cornstarch;
c) cold extrusion of the mixture, at a temperature not higher than 20°C;
d) formation of pellets of, approximately, 1.5 mm to 4 mm in diameter;
e) drying of the pellets in a fluidised-bed dryer.

**2.** A process for the production of a probiotic feed, appropriate for fish, according to claim N° 1, **CHARACTERISED in that** the fermentation conditions are: a source of carbon, at least 10% w/w of molasses, at least 85% w/w of Chilean jack mackerel or fish meal, and at least 5% w/w of inoculum of the probiotic strain incubated at 32°C.

3. A process for the production of a probiotic feed, appropriate for fish, according to claim N° 1, **CHARACTERISED by** the addition in step (b) of at least 35% w/w of fish meal, at least 35% w/w of silage from fish waste products, at least 14% w/w of soybean, at least 8% w/w of wheat middlings, at least 5% w/w of fish oil and at least 3% w/w of cornstarch.

4. A process for the production of a probiotic feed, appropriate for fish, according to claim N° 1, **CHARACTERISED by** the use in drying step (e) of an air input temperature between 40°C and 90°C, for between 40 min and 60 min.

5. A process for the production of a probiotic feed, appropriate for fish, according to claim N° 1, **CHARACTERISED in that** the pellets dried in step (e) have a moisture content lower than 5% on a wet basis.

6. A probiotic feed, appropriate for fish, based on fish silage, **CHARACTERISED by** containing at least one probiotic strain, preferably *Lactobacillus plantarum* LPS47, *Lactococcus lactis lactis* LPS148, *Pediococcus acidilactic* LPS28, *Pediococcus damnosus* LPT32 and/or *Lactobacillus plantarum* LPT87; fish meal, approximately 35% w/w; silage from fish waste products, approximately 35% w/w; soybean, approximately 14% w/w; wheat middlings, approximately 8% w/w; fish oil, approximately 5% w/w; and cornstarch, approximately 3% w/w.

7. A probiotic feed for fish, according to claim N°6, **CHARACTERISED in that** the strains *Lactobacillus plantarum* LPS47, *Lactococcus lactis lactis* LPS148, *Pediococcus acidilactic* LPS28 are obtained from *Salmo salar* and *Oncorhynchus kisutch.*

8. A probiotic feed for fish, according to claim N°6, **CHARACTERISED in that** the strains *Pediococcus damnosus* LPT32 and *Lactobacillus plantarum* LPT87 are obtained from *Onchorhynchus mykiss.*

9. A probiotic feed for fish, according to claim N°6, **CHARACTERISED by** maintaining a concentration of viable probiotic bacteria of over $10^8$ CFU/g for at least 20 days, and a concentration of viable probiotic bacteria higher than the minimum specification of $10^7$ CFU/g for at least 30 days at ambient temperature.

10. A probiotic feed, appropriate for fish, **CHARACTERISED by** incorporating into a commercial pellet feed a fresh biomass solution containing at least one probiotic strain of the type *Lactobacillus plantarum* LPS47, *Lactococcus lactis lactis* LPS148, *Pediococcus acidilactic* LPS28, *Pediococcus damnosus* LPT32 and/or *Lactobacillus plantarum* LPT87.

11. A probiotic feed for fish, according to claim N°10, **CHARACTERISED by** a moisture content of 8% to 9% and a concentration of probiotic strains of at least $10^8$ CFU/g.

12. A probiotic feed for fish, according to claim N°10, **CHARACTERISED by** a concentration of viable probiotic bacteria of $10^7$ CFU/g for at least 15 days of storage and of $10^6$ CFU/g for at least 91 days of storage at ambient temperature.

13. A probiotic feed, appropriate for fish, **CHARACTERISED by** a production process consisting of the following steps:

   a) putting the following into a fermenter: powder feed or pulverised feed and at least one probiotic strain consisting of *Lactobacillus plantarum* LPS47, *Lactococcus lactis lactis* LPS148, *Pediococcus acidilactic* LPS28, *Pediococcus damnosus* LPT32 and/or *Lactobacillus plantarum* LPT87 in the stationary phase and without centrifuging;
   b) dehydrating the pulverised feed in a spray dryer.

14. A probiotic feed for fish, according to claim N° 13, **CHARACTERISED in that** the strains are supported in pulverised feed, at a concentration of at least $10^7$ CFU/g.

15. A probiotic feed for fish, according to claim N° 13, **CHARACTERISED by** a concentration of the strains of at least $10^7$ CFU/g for 6 months stored at 4°C and for 20 days stored at 25°C.

16. A probiotic feed for fish, according to claim N° 13, **CHARACTERISED in that** it is used as the first feed for salmonid alevins at the first stage of the lifecycle of the fish, and for the feeding of small-sized fish.

# Figure Nº1

# Figure Nº 2

### 2A

### 2B

# Figure Nº 3

## Figure Nº 4

4A                  4B

## Figure Nº 5

## Figure Nº 6

## Figure Nº 7

## Figure Nº 8

## Figure Nº 9

## Figure Nº 10

## Figure Nº 11

## Figure Nº 12

**Figure Nº 13**

**Figure Nº 14**

**14A**

**14B**

**EP 2 659 786 A2**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004298080 B
- WO 200404186 A
- US 2002192202 A
- US 2002 A
- NZ 335458
- US 6168815 A

**Non-patent literature cited in the description**

- Probiotic effect of lactic acid bacteria in the feed on growth and survival of fry of Atlantic cod (Gadus morhua. *Hydrobiologia,* 1997, vol. 352, 279-285
- Immune enhancement in rainbow trout (Oncorhynchus mykiss) by potential probiotic bacteria (Lactobacillus rhamnosus). *Fish & Shellfish Immunology,* 2003, vol. 15, 443-452